# EUROPEAN PATENT APPLICATION

(11) **EP 4 489 365 A1**
(43) Date of publication of application: **08.01.2025**
(21) Application number: 23777761.0
(22) Date of filing: 06.03.2023
(51) Int. Cl.: H04L 45/302, H04W 28/18

(54) **COMMUNICATION METHOD AND APPARATUS**

(30) Priority: 28.03.2022 CN 202210316521
(71) Applicant: Huawei Technologies Co., Ltd., Shenzhen, Guangdong 518129 (CN)
(72) Inventor: LI, Yongcui, Shenzhen, Guangdong 518129 (CN)
(74) Representative: MERH-IP Matias Erny Reichl Hoffmann Patentanwälte PartG mbB
(86) International application number: PCT/CN2023/079773
(87) International publication number: WO 2023/185383

(57) **Abstract**

A communication method and an apparatus are provided, to determine that an anchor of a terminal device is on a satellite. A policy control function network element determines that a category of a backhaul network of the terminal device is a satellite backhaul category, determines policy information of the terminal device based on the satellite backhaul category and service deployment information, and sends the policy information to the terminal device. The policy information includes a correspondence between a first-type service and a first-type routing policy, the service deployment information includes deployment information of the first-type service deployed on the satellite, and the first-type routing policy is used for determining a user plane function network element on the satellite as a session anchor of the terminal device. In this way, the policy control function network element can sense the category of the backhaul network of the terminal device, and when the category of the backhaul network of the terminal device is the satellite backhaul category, determine appropriate policy information for the terminal device, so that the terminal device selects a routing policy corresponding to the service deployed on the satellite, and it is ensured that the anchor of the terminal device is determined on the satellite. This reduces a service communication delay and improves user experience.

## Description

### CROSS-REFERENCE TO RELATED APPLICATIONS

This application claims priority to Chinese Patent Application No. 202210316521.2, filed with the China National Intellectual Property Administration on March 28, 2022 and entitled "COMMUNICATION METHOD AND APPARATUS", which is incorporated herein by reference in its entirety.

### TECHNICAL FIELD

This application relates to the field of communication technologies, and in particular, to a communication method and an apparatus.

### BACKGROUND

Currently, satellite communication has gradually become a research hotspot. The satellite communication can be used in scenarios that terrestrial communication hardly covers, such as deserts and oceans. In a satellite communication scenario, a network element originally located on the ground may be deployed on a satellite. For example, a user plane function network element is deployed on the satellite. The user plane function network element is deployed on the satellite, so that the satellite is used as a transmission path between an access network device and the user plane function network element, that is, satellite backhaul is implemented.

Deploying an edge service on the satellite enables the satellite to implement edge computing (edge computing, EC). For example, the user plane function network element deployed on the satellite may enable the satellite to implement the edge computing. When a terminal device establishes a protocol data unit (Protocol Data Unit, PDU) session through the satellite backhaul, a user plane path passes through the user plane function network element on the satellite, and the terminal device accesses a data packet of an EC service on the satellite, the data packet may be directly distributed to an edge computing platform through the user plane network element on the satellite, so that the data packet does not need to pass through a user plane function network element on the ground. In this way, the user plane path is reduced, a service communication delay is reduced, and user experience is improved.

In addition, when the terminal device communicates with another terminal device, the two terminal devices respectively establish, through the satellite backhaul, PDU sessions through user plane function network elements deployed on satellites, and respective user plane paths pass through the user plane function network elements on the corresponding satellites, so that the two terminal devices can directly communicate with each other through the user plane function network elements on the satellites. In this way, a communication path is shortened, and user experience is improved.

However, currently, when a session anchor (PDU session anchor, PSA) of the terminal device is determined, a user plane function network element close to the terminal device is usually determined as the PSA based on a location of the terminal device. As a result, the user plane path of the terminal device may not pass through the user plane function network element on the satellite. Consequently, good user experience cannot be achieved when the terminal device accesses a network through the satellite backhaul. Therefore, a method is urgently needed to ensure that the session anchor of the terminal device is located on the satellite.

### SUMMARY

This application provides a communication method and an apparatus, to determine that an anchor of a terminal device is on a satellite, so that a service communication delay is reduced and user experience is improved.

According to a first aspect, this application provides a communication method. The method may include: After determining that a category of a backhaul network of a terminal device is a satellite backhaul category, a policy control function network element determines policy information of the terminal device based on the satellite backhaul category and service deployment information, and sends the policy information to the terminal device. The policy information may include a correspondence between a first-type service and a first-type routing policy, and the service deployment information includes deployment information of the first-type service. The first-type service is a service deployed on a satellite, and the first-type routing policy is used for determining a user plane function network element on the satellite as a session anchor of the terminal device.

According to the foregoing method, the policy control function network element can sense the category of the backhaul network of the terminal device, to determine appropriate policy information for the terminal device when the category of the backhaul network of the terminal device is the satellite backhaul category, so that the terminal device selects a routing policy corresponding to the service deployed on the satellite, and it is ensured that the anchor of the terminal device is determined on the satellite. In this way, a service communication delay is reduced and user experience is improved.

In a possible design, the policy control function network element may determine, by using the following method, that the category of the backhaul network of the terminal device is the satellite backhaul category: The policy control function network element may obtain the satellite backhaul category from an access and mobility management function network element. In this way, the policy control function network element can successfully sense the category of the backhaul network of the terminal device.

In a possible design, the policy control function network element obtains the service deployment information. In this way, the policy control function network element may determine the policy information of the terminal device with reference to the service deployment information and the category of the backhaul network of the terminal device.

In a possible design, the satellite backhaul category may be a geostationary earth orbit (geostationary earth orbit, GEO) satellite backhaul category.

In a possible design, the service deployment information may further include deployment information of a second-type service, where the second-type service is a service deployed on the ground, and a service included in the second-type service is different from a service included in the first-type service; and the policy information further includes a correspondence between the second-type service and a second-type routing policy. In this way, the policy control function network element may determine corresponding policy information for the terminal device when the category of the backhaul network device of the terminal device changes to a non-satellite backhaul category.

In a possible design, the policy control function network element may send subscription information to the access and mobility management function network element, where the subscription information is used for subscribing to a change indication of the category of the backhaul network of the terminal device. Further, the policy control function network element receives indication information from the access and mobility management function network element, where the indication information indicates that the category of the backhaul network of the terminal device changes. The policy control network element may update the policy information of the terminal device based on the indication information. In this way, the policy control function network element may update the policy information of the terminal device based on a change of the category of the backhaul network of the terminal device, to ensure that the service is successfully performed.

According to a second aspect, this application provides a communication method. The method may include: A terminal device receives policy information from a policy control network element, where the policy information may include a correspondence between a first-type service and a first-type routing policy, the first-type service is a service deployed on a satellite, and the first-type routing policy is used for determining a user plane function network element on the satellite as a session anchor of the terminal device; and the terminal device further determines, based on the policy information, the first-type routing policy corresponding to the first-type service.

According to the foregoing method, the policy control function network element can sense a category of a backhaul network of the terminal device, to determine appropriate policy information for the terminal device when the category of the backhaul network of the terminal device is a satellite backhaul category, so that the terminal device selects a routing policy corresponding to the service deployed on the satellite, and it is ensured that the anchor of the terminal device is determined on the satellite. In this way, a service communication delay is reduced and user experience is improved.

In a possible design, the category of the backhaul network of the terminal device is the satellite backhaul category.

In a possible design, the satellite backhaul category is a GEO satellite backhaul category.

In a possible design, the policy information further includes a correspondence between a second-type service and a second-type routing policy. The second-type service is a service deployed at a location other than the satellite, and a service included in the second-type service is different from a service included in the first-type service. In this way, when the category of the backhaul network of the terminal device changes to a non-satellite backhaul category, a corresponding routing policy may be determined, to ensure that the service is successfully performed.

According to a third aspect, this application provides a communication method. The method may include: A terminal device obtains first indication information from an access and mobility management function network element, and receives policy information from a policy control function network element, so that the terminal device determines, based on the first indication information and the policy information, a first-type routing policy corresponding to a first-type service. The first indication information indicates that a category of a backhaul network of the terminal device is a satellite backhaul category, and the policy information includes a correspondence among the first-type service, the first-type routing policy, and second indication information. The first-type service is a service deployed on a satellite, the first-type routing policy is used for determining a user plane function network element on the satellite as a session anchor of the terminal device, and the second indication information indicates that the policy information is used when the category of the backhaul network is the satellite backhaul category.

According to the foregoing method, the terminal device senses the category of the backhaul network of the terminal device, and a routing policy is used when the satellite backhaul category is specified in the policy information of the terminal device by using the second indication information, so that when the terminal device accesses a network through satellite backhaul, the terminal device can select an appropriate routing policy, and it is ensured that the anchor of the terminal device is determined on the satellite. In this way, a service communication delay is reduced and user experience is improved.

In a possible design, the terminal device stores the first indication information. In this way, the terminal device may determine, based on the stored first indication information and the policy information, the first-type routing policy corresponding to the first-type service.

In a possible design, the terminal device may obtain the first indication information from the access and mobility management function network element by using the following method: The terminal device may receive a registration accept message from the access and mobility management function network element, where the registration accept message includes the first indication information; or the terminal device may receive a configuration update message from the access and mobility management function network element, where the configuration update message includes the first indication information. In this way, the terminal device may successfully sense the category of the backhaul network of the terminal device by using a registration procedure or a configuration update procedure.

In a possible design, the satellite backhaul category is a geostationary earth orbit GEO satellite backhaul category.

In a possible design, the policy information may further include a correspondence between the first-type service and a second-type routing policy, and the second-type routing policy is used for determining a user plane function network element on the ground as the session anchor of the terminal device. In this way, when the category of the backhaul network of the terminal device changes to a non-satellite backhaul category, a corresponding routing policy may be determined, to ensure that the service is successfully performed.

In a possible design, the terminal device may send a non-access stratum message to the access and mobility management function network element, where the non-access stratum message includes the first-type routing policy. In this way, when the access and mobility management function network element subsequently sends the first-type routing policy to a session management function network element, it can be ensured that the anchor of the terminal device is determined on the satellite, so that the service communication delay is reduced and user experience is improved.

In a possible design, the second indication information is included in the first-type routing policy. In this way, it may be indicated that the first-type routing policy is used in a satellite backhaul scenario.

In a possible design, the terminal device may receive third indication information from the access and mobility management function network element, where the third indication information indicates an updated category of the backhaul network of the terminal device. Further, the terminal device may update, based on the third indication information, the routing policy corresponding to the first-type service. In this way, the terminal device may update the routing policy of the terminal device based on a change of the category of the backhaul network of the terminal device, to ensure that the service is successfully performed.

According to a fourth aspect, this application provides a communication method. The method may include: After determining that a category of a backhaul network of a terminal device is a satellite backhaul category, an access and mobility management function network element sends first indication information to the terminal device, where the first indication information indicates that the category of the backhaul network of the terminal device is the satellite backhaul category.

According to the foregoing method, the terminal device can sense the category of the backhaul network of the terminal device, so that when the terminal device accesses a network through satellite backhaul, the terminal device can select an appropriate routing policy, to ensure that an anchor of the terminal device is determined on a satellite. In this way, a service communication delay is reduced and user experience is improved.

In a possible design, the access and mobility management function network element may send the first indication information to the terminal device by using the following method: The access and mobility management function network element may send a registration accept message to the terminal device, where the registration accept message includes the first indication information; or the access and mobility management function network element may send a configuration update message to the terminal device, where the configuration update message includes the first indication information. In this way, the access and mobility management function network element may notify the category of the backhaul network of the terminal device in a registration procedure or a configuration update procedure.

In a possible design, the satellite backhaul category is a GEO satellite backhaul category.

In a possible design, after determining that the category of the backhaul network of the terminal device changes, the access and mobility management function network element sends third indication information to the terminal device, where the third indication information indicates an updated category of the backhaul network of the terminal device. In this way, when the category of the backhaul network changes to a non-satellite backhaul category, the terminal device may determine a corresponding routing policy, to ensure that the service is successfully performed.

According to a fifth aspect, this application provides a communication method. The method may include: A policy control function network element determines policy information, and sends the policy information to a terminal device, where the policy information includes a correspondence among a first-type service, a first-type routing policy, and second indication information, the first-type service is a service deployed on a satellite, the first-type routing policy is used for determining a user plane function network element on the satellite as a session anchor of the terminal device, and the second indication information indicates that the policy information is used when a category of a backhaul network is a satellite backhaul category.

According to the foregoing method, a routing policy is used when the satellite backhaul category is specified in the policy information of the terminal device by using the second indication information, so that when the terminal device accesses a network through satellite backhaul, the terminal device can select an appropriate routing policy, and it is ensured that the anchor of the terminal device is determined on the satellite. In this way, a service communication delay is reduced and user experience is improved.

In a possible design, the satellite backhaul category is a GEO satellite backhaul category.

In a possible design, the policy information may further include a correspondence between the first-type service and a second-type routing policy, and the second-type routing policy is used for determining a user plane function network element on the ground as the session anchor of the terminal device. In this way, when the category of the backhaul network of the terminal device changes to a non-satellite backhaul category, the terminal device may determine a corresponding routing policy, to ensure that the service is successfully performed.

In a possible design, the second indication information is included in the first-type routing policy. In this way, it may be indicated that the first-type routing policy is used in a satellite backhaul scenario.

According to a sixth aspect, this application further provides a communication apparatus. The communication apparatus may be a policy control function network element, and the communication apparatus has a function of implementing the method according to the first aspect or the possible design examples of the first aspect, or the method according to the fifth aspect or the possible design examples of the fifth aspect. The function may be implemented by hardware, or may be implemented by hardware executing corresponding software. The hardware or the software includes one or more modules corresponding to the foregoing function.

In a possible design, a structure of the communication apparatus includes a transceiver unit and a processing unit. The units may perform the corresponding function in the first aspect or the possible design examples of the first aspect, or the fifth aspect or the possible design examples of the fifth aspect. For details, refer to detailed descriptions in the method examples. Details are not described herein again.

In a possible design, the structure of the communication apparatus includes the transceiver and the processor, and optionally further includes a memory. The transceiver is configured to receive and send information or data, and is configured to communicate and interact with another device in a communication system. The processor is configured to support the communication apparatus in performing the corresponding function in the first aspect or the possible design examples of the first aspect, or the fifth aspect or the possible design examples of the fifth aspect. The memory is coupled to the processor, and stores program instructions and data that are necessary for the communication apparatus.

According to a seventh aspect, this application further provides a communication apparatus. The communication apparatus may be a terminal device, and the communication apparatus has a function of implementing the method according to the second aspect or the possible design examples of the second aspect, or the method according to the third aspect or the possible design examples of the third aspect. The function may be implemented by hardware, or may be implemented by hardware executing corresponding software. The hardware or the software includes one or more modules corresponding to the foregoing function.

In a possible design, a structure of the communication apparatus includes a transceiver unit and a processing unit. The units may perform the corresponding function in the second aspect or the possible design examples of the second aspect, or in the third aspect or the possible design examples of the third aspect. For details, refer to detailed descriptions in the method examples. Details are not described herein again.

In a possible design, the structure of the communication apparatus includes the transceiver and the processor, and optionally further includes a memory. The transceiver is configured to receive and send information or data, and is configured to communicate and interact with another device in a communication system. The processor is configured to support the communication apparatus in performing the corresponding function in the second aspect or the possible design examples of the second aspect, or the third aspect or the possible design examples of the third aspect. The memory is coupled to the processor, and stores program instructions and data that are necessary for the communication apparatus.

According to an eighth aspect, this application further provides a communication apparatus. The communication apparatus may be an access and mobility management function network element, and the communication apparatus has a function of implementing the method according to the fourth aspect or the possible design examples of the fourth aspect. The function may be implemented by hardware, or may be implemented by hardware executing corresponding software. The hardware or the software includes one or more modules corresponding to the foregoing function.

In a possible design, a structure of the communication apparatus includes a transceiver unit and a processing unit. The units may perform the corresponding function in the fourth aspect or the possible design examples in the fourth aspect. For details, refer to detailed descriptions in the method examples. Details are not described herein again.

In a possible design, the structure of the communication apparatus includes the transceiver and the processor, and optionally further includes a memory. The transceiver is configured to receive and send information or data, and is configured to communicate and interact with another device in a communication system. The processor is configured to support the communication apparatus in performing the corresponding function in the fourth aspect or the possible design examples of the fourth aspect. The memory is coupled to the processor, and stores program instructions and data that are necessary for the communication apparatus.

According to a ninth aspect, an embodiment of this application provides a communication system. The communication system may include the policy control function network element, the terminal device, the access and mobility management function network element, and the like mentioned above.

According to a tenth aspect, an embodiment of this application provides a computer-readable storage medium. The computer-readable storage medium stores program instructions, and when the program instructions are run on a computer, the computer is enabled to perform the method according to any one of the first aspect and the possible designs of the first aspect, or the method according to any one of the second aspect and the possible designs of the second aspect, or the method according to any one of the third aspect and the possible designs of the third aspect, or the method according to any one of the fourth aspect and the possible designs of the fourth aspect, or the method according to any one of the fifth aspect and the possible designs of the fifth aspect of embodiments of this application. For example, the computer-readable storage medium may be any usable medium accessible to the computer. By way of example and not limitation, the computer-readable medium may include a non-transient computer-readable medium, a random access memory (random-access memory, RAM), a read-only memory (read-only memory, ROM), an electrically erasable programmable read-only memory (electrically EPROM, EEPROM), a CD-ROM or another optical disc storage, a magnetic disk storage medium or another magnetic storage device, or any other medium capable of carrying or storing expected program code in a form of instructions or data structures and capable of being accessed by the computer.

According to an eleventh aspect, an embodiment of this application provides a computer program product, including computer program code or instructions. When the computer program code or the instructions are run on a computer, the method according to any one of the first aspect or the possible designs of the first aspect, or the method according to any one of the second aspect or the possible designs of the second aspect, or the method according to any one of the third aspect or the possible designs of the third aspect, or the method according to any one of the fourth aspect or the possible designs of the fourth aspect, or the method according to any one of the fifth aspect or the possible designs of the fifth aspect is performed.

According to a twelfth aspect, this application further provides a chip, including a processor. The processor is coupled to a memory, and is configured to read and execute program instructions stored in the memory, so that the chip implements the method according to any one of the first aspect or the possible designs of the first aspect, or the method according to any one of the second aspect or the possible designs of the second aspect, or the method according to any one of the third aspect or the possible designs of the third aspect, or the method according to any one of the fourth aspect or the possible designs of the fourth aspect, or the method according to any one of the fifth aspect or the possible designs of the fifth aspect.

For all aspects in the sixth aspect to the twelfth aspect and technical effects that may be achieved in each aspect, refer to descriptions of technical effects that can be achieved in the first aspect or the possible solutions of the first aspect, or the second aspect or the possible solutions of the second aspect, or the third aspect or the possible solutions of the third aspect, or the fourth aspect or the possible solutions of the fourth aspect, or the fifth aspect or the possible solutions of the fifth aspect. Details are not described herein again.

### BRIEF DESCRIPTION OF DRAWINGS

FIG. 1 is a schematic diagram of an architecture of a communication system according to this application;
FIG. 2 is a schematic diagram of a satellite backhaul scenario according to this application;
FIG. 3 is a schematic diagram of another satellite backhaul scenario according to this application;
FIG. 4 is a flowchart of a communication method according to this application;
FIG. 5 is a flowchart of another communication method according to this application;
FIG. 6 is a flowchart of an example of a communication method according to this application;
FIG. 7 is a flowchart of an example of another communication method according to this application;
FIG. 8 is a schematic diagram of a structure of a communication apparatus according to this application; and
FIG. 9 is a diagram of a structure of a communication apparatus according to this application.

### DESCRIPTION OF EMBODIMENTS

The following further describes in detail this application with reference to accompanying drawings.

Embodiments of this application provide a communication method and an apparatus, to determine that an anchor of a terminal device is on a satellite, so that a service communication delay is reduced and user experience is improved. The method and the apparatus in this application are based on a same technical concept. Because problem-resolving principles of the method and the apparatus are similar, mutual reference may be made to implementations of the apparatus and the method, and repeated parts are not described again.

In the descriptions of this application, terms such as "first" and "second" are only for distinction and description, but cannot be understood as indicating or implying relative importance, or as indicating or implying an order.

In the descriptions of this application, "at least one (types)" means one (type) or more (types), and a plurality of (types) means two (types) or more (types). "At least one of the following" or a similar expression thereof means any combination of these items, including any combination of a single item or a plurality of items. For example, at least one of a, b, or c may represent a, b, c, a and b, a and c, b and c, or a, b, and c, where a, b, and c may be singular or plural.

In the descriptions of this application, "and/or" describes an association relationship between associated objects, and represents that three relationships may exist. For example, A and/or B may represent the following three cases: Only A exists, both A and B exist, and only B exists, where A and B may be singular or plural. / represents "or". For example, a/b represents a or b.

To describe the technical solutions in embodiments of this application more clearly, the following describes the communication method and the apparatus according to embodiments of this application in detail with reference to the accompanying drawings.

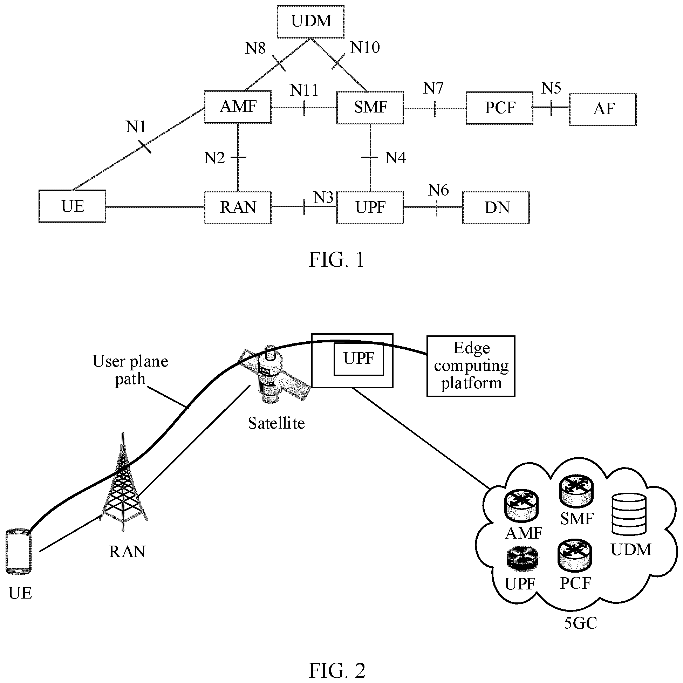

FIG. 1 shows a possible example of an architecture of a 5th generation (the 5th generation, 5G) communication system. The architecture of the communication system may include a terminal device (also referred to as user equipment (user equipment, UE)), a (radio) access network (radio access network, RAN) device, a user plane function (user plane function, UPF) network element, an access and mobility management function (access and mobility management function, AMF) network element, a session management function (session management function, SMF) network element, a policy control function (policy control function, PCF) network element, an application function (application function, AF) network element, a unified data management function (unified data management, UDM) network element, a data network (data network, DN), and the like. The AMF network element may be connected to the RAN device through an N2 interface, the RAN device may be connected to the UPF network element through an N3 interface, the SMF network element may be connected to the UPF network element through an N4 interface, the AMF network element may be connected to the UE through an N1 interface, the AMF network element may be connected to the SMF network element through an N11 interface, the SMF network element may be connected to the PCF network element through an N7 interface, the PCF network element may be connected to the AF network element through an N5 interface, the AMF network element may be connected to the UDM network element through an N8 interface, and the SMF network element may be connected to the UDM network element through an N10 interface. The foregoing interface names are merely examples for description, and there may be other interface names. This is not specifically limited in this embodiment of this application.

It should be understood that this embodiment of this application is not limited to the communication system shown in FIG. 1. The names of the network elements shown in FIG. 1 are merely used as examples for description herein, and are not used as limitations on the network elements included in the communication system architecture to which the method in this application is applicable. The following describes in detail a function of each network element or device in the communication system.

The terminal device may also be referred to as the user equipment (user equipment, UE), a mobile station (mobile station, MS), a mobile terminal (mobile terminal, MT), or the like, and is a device that provides voice and/or data connectivity for a user. For example, the terminal device may include a handheld device that has a wireless connection function, a vehicle-mounted device, and the like. Currently, the terminal device may be a mobile phone (mobile phone), a tablet, a notebook computer, a palmtop, a mobile Internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. In FIG. 1, the terminal device is shown by using the UE as an example, and the terminal device is not limited.

The RAN device is a device that provides access for the terminal device, and is mainly responsible for functions such as radio resource management, quality of service (quality of service, QoS) management, and data compression and encryption on an air interface side. The RAN device may include base stations in various forms, for example, a macro base station, a micro base station (also referred to as a small cell), a relay station, and an access point. In systems using different radio access technologies, a device having a function of the base station may have a different name. For example, in the 5G system, the device is referred to as a RAN, a gNB (5G NodeB), or the like.

The AMF network element may be configured to manage access control and mobility of the terminal device. In actual application, the AMF network element includes a mobility management function in a mobility management entity (mobility management entity, MME) in a network framework in long term evolution (long term evolution, LTE), and includes an access management function. The AMF network element may be responsible for registration of the terminal device, mobility management, a tracking area update procedure, reachability detection, selection of a session management function network element, mobility status transition management, and the like.

The SMF network element may be configured to be responsible for session management (including session establishment, modification, and release) of the terminal device, selection and reselection of a user plane function network element, internet protocol (internet protocol, IP) address allocation of the terminal device, quality of service (quality of service, QoS) control, selection of a UPF network element that provides a packet forwarding function, and the like.

The UPF network element is responsible for forwarding and receiving user data in the terminal device. The UPF network element may receive the user data from the data network, and transmit the user data to the terminal device through an access network device. The UPF network element may further receive the user data from the terminal device through the access network device, and forward the user data to the data network. A transmission resource and a scheduling function in the UPF network element that provide a service for the terminal device are managed and controlled by the SMF network element.

The PCF network element mainly supports in providing a unified policy framework to control network behavior, and providing a policy rule to a control layer network function, and is responsible for obtaining policy-related subscription information of a subscriber. For example, the PCF network element may provide a policy, such as a QoS policy or a slice selection policy, for the AMF network element and the SMF network element.

The AF network element mainly supports in interacting with a 3GPP core network to provide a service, for example, affecting a data routing decision and a policy control function, or providing some third-party services for a network side.

The UDM network element is configured to generate an authentication credential, process a subscriber identifier (for example, store and manage a subscription permanent identifier), control access authorization, manage subscription data, and the like.

The DN is a serving network that provides a data transmission service for the subscriber, such as an IP multimedia service (IP multi-media service, IMS) or the Internet (Internet).

The UE accesses the DN through establishing a protocol data unit (protocol data unit, PDU) session among the UE, the RAN, and the DN.

Each of the network elements in the core network may also be referred to as a functional entity or a device, and may be a network element implemented on dedicated hardware, or may be a software instance run on dedicated hardware, or an instance of a virtualization function on a proper platform. For example, the foregoing virtualization platform may be a cloud platform.

It should be noted that the architecture of the communication system shown in FIG. 1 is not limited to including only the network elements shown in the figure, and may further include another device not shown in the figure. Details are not described herein in this application one by one.

It should be noted that a distribution form of the network elements is not limited in embodiments of this application. The distribution form shown in FIG. 1 is merely an example, and is not limited in this application.

For ease of description, in this application, the network elements shown in FIG. 1 are used as examples for description subsequently, and an XX network element is directly referred to as an XX for short. For example, an SMF network element is referred to as an SMF for short. It should be understood that names of all network elements in this application are merely used as examples, and may also be referred to as other names in future communication, or the network element in this application may be replaced by another entity or device that has a same function in the future communication. This is not limited in this application. Unified descriptions are provided herein, and details are not described below again.

It should be noted that the communication system shown in FIG. 1 does not constitute a limitation on a communication system to which embodiments of this application are applicable. The architecture of the communication system shown in FIG. 1 is a 5G system architecture. Optionally, the method in embodiments of this application is further applicable to various future communication systems, such as a 6G or another communication network.

It should be noted that names of all messages and information in this application are merely used as examples, and may be other names. This is not limited in this application. It should be understood that a message or information from a network element 1 to a network element 2 may be directly sent by the network element 1 to the network element 2, or may be indirectly sent. For example, the network element 1 first sends a message or information to a network element 3, the network element 3 then sends the message or information to the network element 2, and finally the message or information is sent to the network element 2 through one or more network elements.

In some embodiments, in the communication system shown in FIG. 1, when a satellite is used as a transmission path between the RAN and the UPF, this may be referred to as a satellite backhaul (satellite backhaul, SATB) scenario.

For example, FIG. 2 is a schematic diagram of a possible satellite backhaul scenario. In this scenario, deploying an edge service on a satellite enables the satellite to implement edge computing (edge computing, EC). UE accesses a 5G core network (5G core, 5GC) by using the satellite, and an UPF is deployed on the satellite. A user plane path for establishing a PDU session by the UE may be the UE, a RAN, or the UPF on the satellite. The UPF deployed on the satellite enables the satellite to implement the edge computing. In this way, when the UE accesses data packets of an EC service on the satellite, the data packets may be directly distributed to an edge computing platform through the UPF on the satellite, so that the data packets do not need to be sent to the edge computing platform through a UPF on the ground. In this way, the user plane path is reduced, a service communication delay is reduced, and user experience is improved.

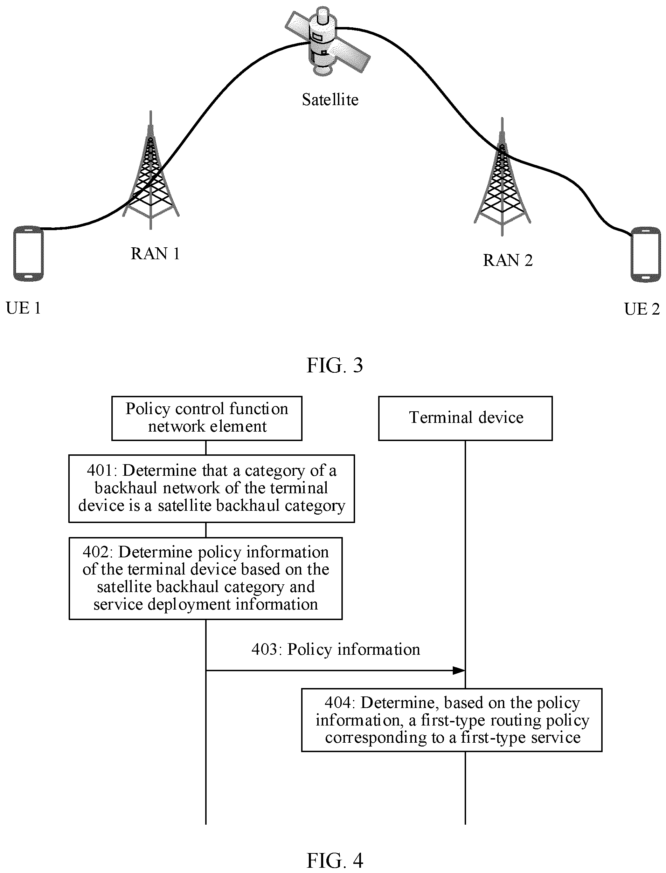

For another example, FIG. 3 is a schematic diagram of another possible satellite backhaul scenario. In this scenario, UE 1 establishes a PDU session 1 through satellite backhaul, and a user plane path is the UE 1, a RAN 1, and an IPF 1 on a satellite. UE 2 establishes a PDU session 2 through the satellite backhaul, and a user plane path is the UE 2, a RAN 2, and an UPF 2 on the satellite. Direct communication between the UE 1 and the UE 2 can be implemented through the UPF 1 and the UPF 2 on the satellite. That is, local switch (local switch) can be implemented, so that a communication path between the UE 1 and the UE 2 is shortened, and user experience is improved.

It should be noted that FIG. 3 shows only an example in which the UE 1 and the UE 2 correspond to a same satellite. It should be understood that the UE 1 and the UE 2 may respectively correspond to different satellites. Optionally, when the UE 1 and the UE 2 correspond to the same satellite, the UPF 1 corresponding to the UE 1 and the UPF 2 corresponding to the UE 2 may be the same or different. This is not limited in this application.

It should be noted that the satellites shown in FIG. 2 and FIG. 3 may be, but are not limited to, geostationary earth orbit (geostationary earth orbit, GEO) satellites.

To shorten the communication path, reduce the service delay, and improve user experience that can be implemented in the scenarios in FIG. 2 and FIG. 3, it can be ensured that a session anchor (PDU session anchor, PSA) of a terminal device is on the satellite when the satellite can support a service that needs to be implemented by the terminal device. However, currently, when the PSA of the terminal device is determined, a UPF close to the terminal device is usually determined as the PSA based on a location of the terminal device. As a result, it cannot be ensured that the PSA of the terminal device is anchored on the satellite. Consequently, good user experience cannot be achieved when the terminal device accesses a network through the satellite backhaul.

Based on this, this application proposes a communication method, to ensure that the anchor of the terminal device is determined on the satellite, so that the service communication delay is reduced and user experience is improved.

Based on the foregoing descriptions, as shown in FIG. 4, an embodiment of this application provides a communication method. A specific procedure of the method may include the following steps.

Step 401: A policy control function network element determines that a category of a backhaul network of a terminal device is a satellite backhaul category.

For example, the category of the backhaul network of the terminal device may indicate a category of a backhaul link of the terminal device, and may include the satellite backhaul category and a non-satellite backhaul category. The satellite backhaul category indicates that the terminal device accesses a network through satellite backhaul, and the non-satellite backhaul category indicates that the terminal device does not access the network through the satellite backhaul.

In an optional implementation, when determining that the category of the backhaul network of the terminal device is the satellite backhaul category, the policy control function network element may obtain the satellite backhaul category from an access and mobility management function network element.

For example, in a registration procedure of the terminal device, when determining that the terminal device accesses the network through the satellite backhaul, the access and mobility management function network element may send an indication to the policy control function network element, indicating that the category of the backhaul network of the terminal device is the satellite backhaul category, so that the policy control function network element may determine that the category of the backhaul network of the terminal device is the satellite backhaul category.

Optionally, the access and mobility management function network element may determine, based on information received by the access and mobility management function network element from an access network device, or based on local configuration information, whether the terminal device accesses the network through the satellite backhaul.

For example, for different backhaul links, the access network device sends different transport layer information to the access and mobility management function network element, so that after receiving the transport layer information sent by the access network device, the access and mobility management function network element may determine the category of the backhaul network of the terminal device based on a locally stored correspondence between the transport layer information and the category of the backhaul network. When the access and mobility management function network element receives the satellite backhaul category corresponding to the transport layer information sent by the access network device, the access and mobility management function network element may determine that the category of the backhaul network of the terminal device is the satellite backhaul category.

Optionally, the satellite backhaul category may include a plurality of types, and the satellite backhaul category corresponding to the transport layer information may also be different satellite backhaul categories corresponding to different transport layer information. For example, the satellite backhaul category may be geostationary earth orbit satellite backhaul, low-earth orbit satellite backhaul, or the like.

An optional satellite backhaul category may be the GEO satellite backhaul category. In this application, only the GEO satellite backhaul category is used as an example for description, and this is not intended to limit this application.

For example, the policy control function network element determines that the category of the backhaul network of the terminal device is the GEO satellite backhaul category.

Step 402: The policy control function network element determines policy information of the terminal device based on the satellite backhaul category and service deployment information. The policy information includes a correspondence between a first-type service and a first-type routing policy, the service deployment information includes deployment information of the first-type service (where in other words, the service deployment information includes information about a service deployed on a satellite), the first-type service is the service deployed on the satellite, and the first-type routing policy is used for determining a user plane function network element on the satellite as a session anchor of the terminal device.

Optionally, the first-type service is the service deployed on the satellite, and may be a service deployed on a GEO satellite. Further, the GEO satellite is a satellite on a satellite backhaul link currently accessed by the terminal device.

A routing policy indicates corresponding route selection parameters for accessing a service, for example, parameters such as single network slice selection assistance information (single network slice selection assistance information, S-NSSAI) and a data network name (data network name, DNN). The first-type routing policy indicates route selection parameters corresponding to the first-type service, for example, S-NSSAI and a DNN that correspond to the first-type service.

Optionally, the service deployment information may further include deployment information of a second-type service (where in other words, the service deployment information further includes information about a service that is not deployed on the satellite). The second-type service is a service deployed at a location other than the satellite. In other words, the second-type service is a service not deployed on a satellite, for example, a service deployed on the ground. The first-type service and the second-type service each may include one or more services. The service included in the second-type service is different from the service included in the first-type service. In other words, the second-type service is another service than the first-type service.

When the service deployment information further includes the deployment information of the second-type service, the policy information may further include a correspondence between the second-type service and a second-type routing policy. The second-type routing policy indicates a route selection parameter corresponding to the second-type service, for example, S-NSSAI and a DNN corresponding to the second-type service.

For example, it is assumed that the first-type service includes a service 1 and a service 2, and the second-type service includes other services, where the other services are services other than the service 1 and the service 2. For example, the service 1 to a service 10 are deployed, and the other services are the service 3 to the service 10. When the policy information includes the correspondence between the first-type service and the first-type routing policy and the correspondence between the second-type service and the second-type routing policy, the policy information may be shown in Table 1.

**Table 1**

| Policy information | |
|---|---|
| Service | Route selection policy, including a DNN and S-NSSAI |
| Service 1, service 2 | (DNN, S-NSSAI)-1 |
| Other services | (DNN, S-NSSAI)-2 |

It can be learned from Table 1 that a routing policy (namely, the first-type routing policy) corresponding to the service 1 and the service 2 includes (DNN, S-NSSAI)-1, and (DNN, S-NSSAI)-1 may be understood as a DNN 1 and S-NSSAI 1; and a routing policy (namely, a second-type routing policy) corresponding to the other services includes (DNN, S-NSSAI)-2, and (DNN, S-NSSAI)-2 may be understood as a DNN 2 and S-NSSAI 2.

Based on Table 1, when the terminal device accesses the service 1 or the service 2, the terminal device may establish a session based on (DNN, S-NSSAI)-1, that is, establish a session whose anchor is located on the satellite, that is, determine the user plane function network element on the satellite as the session anchor of the terminal device. When the terminal device accesses the other services, the terminal device establishes a session based on (DNN, S-NSSAI)-2, that is, establishes a session whose anchor is not located on the satellite (for example, located on the ground).

It should be understood that when the policy information does not include the correspondence between the second-type service and the second-type routing policy, content of the policy information does not include the other services and (DNN, S-NSSAI)-2 corresponding to the other services in Table 1.

It should be noted that the correspondence between the service 1 and (DNN, S-NSSAI)-1 and the correspondence between the service 2 and (DNN, S-NSSAI)-1 in Table 1 are only one type of service and DNNs and S-NSSAI corresponding to the type of service. Optionally, the correspondences between the service 1 and (DNN, S-NSSAI)-1 and between the service 2 and (DNN, S-NSSAI)-1 may respectively include the service 1 and the DNN and the S-NSSAI corresponding to the service 1, and the service 2 and the DNN and the S-NSSAI corresponding to the service 2, that is, the DNNs and the S-NSSAI corresponding to the service 1 and the service 2. Similarly, correspondences between the other services and (DNN, S-NSSAI)-2 may also include different services and specific DNNs and S-NSSAI that are respectively corresponding to the different services. In this application, an example of only one type of service and a routing policy corresponding to the type of service is used for description.

In some embodiments, some services may be deployed on the satellite, or may be deployed at a location other than the satellite (for example, on the ground). In other words, when same services are deployed on the satellite and at the location other than the satellite, for the services, a routing policy included in the policy information is a routing policy corresponding to the service deployed on the satellite.

In an optional implementation, the service deployment information may be represented by using a correspondence between a data network access identifier (data network access identifier, DNAI) and a full qualified domain name (full qualified domain name, FQDN). Further, the service deployment information may further include other information such as the DNN and the S-NSSAI. For example, the service deployment information of the satellite may be represented by using a correspondence between a satellite-related DNAI and an FQDN. It should be noted that the satellite-related DNAI may be alternatively described as a satellite identifier (SAT ID) or the like. This is not limited in this application.

For example, when determining the policy information of the terminal device based on the satellite backhaul category and the service deployment information, the policy control function network element may determine, based on the satellite backhaul category and the service deployment information of the satellite, the policy information that includes the correspondence between the first-type service and the first-type routing policy. It is assumed that the terminal device accesses a network through GEO satellite backhaul, and the service deployment information includes deployment information of the service 1 and the service 2. In the policy information determined by the policy control function network element, (DNN, S-NSSAI)-1 is used for the service 1 and the service 2, and (DNN, S-NSSAI)-2 is used for the other services, for example, the service 3 to the service 10.

It may be understood that the policy information determined by the policy control function network element meets subscription of the terminal device. For example, if UE subscription allows only access to the service 1, the policy information includes only the service 1 and a corresponding routing policy.

In an optional implementation, before the policy control function network element determines the policy information of the terminal device based on the satellite backhaul category and the service deployment information, the policy control function network element obtains the service deployment information.

For example, the policy control function network element may obtain the service deployment information by using the following method: The policy control function network element may obtain the service deployment information from an application function network element; or the policy control function network element may obtain the service deployment information from a unified data repository (unified data repository, UDR), where the service deployment information in the UDR is stored in the UDR by the application function network element.

It should be noted that the UDR and the UDM in this application may not be distinguished, and the foregoing uses only the UDR as an example for description.

Optionally, the first-type service and the second-type service may be edge computing services.

Step 403: The policy control function network element sends the policy information to the terminal device.

For example, the policy control function network element may send the policy information to the terminal device through a network element such as the access and mobility management function network element.

Step 404: The terminal device determines, based on the policy information, the first-type routing policy corresponding to the first-type service.

Then, the terminal device may establish a session based on the first-type routing policy, that is, establish a session whose anchor is located on the satellite. Specifically, the terminal device may send the first-type routing policy to a session management function network element through the access and mobility management function network element, and the session management function network element selects, based on the first-type routing policy, the user plane function network element on the satellite as the session anchor of the terminal device.

In an optional implementation, when the access and mobility management function network element determines that the category of the backhaul network of the terminal device changes, the policy control function network element receives indication information from the access and mobility management function network element, where the indication information indicates that the category of the backhaul network of the terminal device changes. Further, the policy control network element updates the policy information of the terminal device based on the indication information.

Further, the policy control function network element may send subscription information to the access and mobility management function network element, where the subscription information is used for subscribing to a change indication of the category of the backhaul network of the terminal device.

The change indication indicates a change of the category of the backhaul network, for example, a change between the satellite backhaul category and the non-satellite backhaul category. Alternatively, the change indication may indicate a changed category of the backhaul network.

Optionally, when the indication information received by the policy control function network element from the access and mobility management function network element indicates that the category of the backhaul network of the terminal device changes, the indication information may directly indicate that the category of the backhaul network changes, or may indicate that the category of the backhaul network changes by using the changed category of the backhaul network.

In an example, when the policy control network element updates the policy information of the terminal device based on the indication information, when the category of the backhaul network of the terminal device changes from the satellite backhaul category to the non-satellite backhaul category, or when the category of the backhaul network of the terminal device changes from the GEO satellite backhaul to the low-earth orbit (low earth orbit, LEO) satellite backhaul, the policy information of the terminal device updated by the policy control network element may no longer include the first-type service and the corresponding routing policy, so that the terminal device establishes, for the first-type service, a session whose anchor is not located on the satellite (for example, on the ground) or not located on the GEO satellite.

It may be understood that, for an established session anchored on the satellite, the terminal device may immediately release the session or release the session when a service on the session ends.

According to the foregoing communication method, the policy control function network element can sense the category of the backhaul network of the terminal device, so that when the category of the backhaul network of the terminal device is the satellite backhaul category, the policy control function network element determines appropriate policy information for the terminal device, so that the terminal device selects the routing policy corresponding to the service deployed on the satellite, and it is ensured that the anchor of the terminal device is determined on the satellite. In this way, the service communication delay is reduced and user experience is improved.

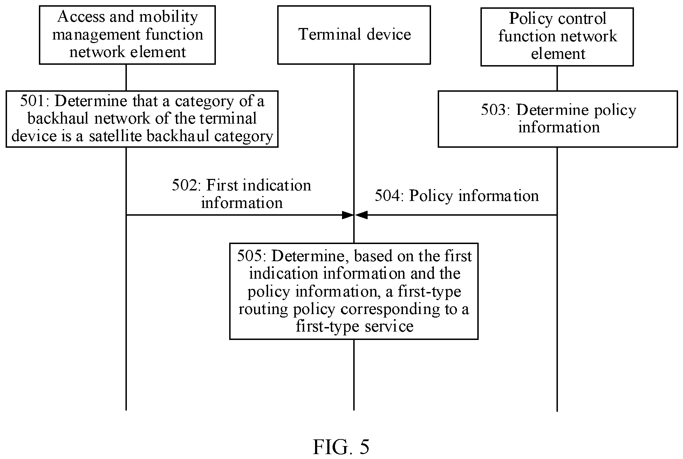

Based on the foregoing descriptions, as shown in FIG. 5, an embodiment of this application provides another communication method. A specific procedure of the method may include the following steps.

Step 501: An access and mobility management function network element determines that a category of a backhaul network of a terminal device is a satellite backhaul category.

Specifically, for descriptions of the category of the backhaul network of the terminal device, refer to related descriptions in the embodiment shown in FIG. 4. Details are not described herein again.

Optionally, for a method in which the access and mobility management function network element determines that the category of the backhaul network of the terminal device is the satellite backhaul category, refer to related descriptions in step 401. Details are not described herein again.

In an example, the satellite backhaul category may be a GEO satellite backhaul category.

Step 502: The access and mobility management function network element sends first indication information to the terminal device, where the first indication information indicates that the category of the backhaul network of the terminal device is the satellite backhaul category.

In an optional implementation, the access and mobility management function network element may send the first indication information to the terminal device in the following two manners:

Manner a1: The access and mobility management function network element sends a registration accept message to the terminal device, where the registration accept message includes the first indication information.

Manner a2: The access and mobility management function network element sends a configuration update message to the terminal device, where the configuration update message includes the first indication information.

In Manner a1, after the terminal device initiates a registration procedure, after determining that the category of the backhaul network of the terminal device is the satellite backhaul category, the access and mobility management function network element may send the first indication information to the terminal device by using the method in Manner a1.

In Manner a2, in a configuration update procedure of the terminal device, after determining that the category of the backhaul network of the terminal device is the satellite backhaul category, the access and mobility management function network element may send the first indication information to the terminal device by using the method in Manner a2.

Optionally, the operations in Manner a1 and Manner a2 may coexist, or may exist separately. This is not limited in this application.

For example, after the terminal device receives the first indication information, the terminal device stores the first indication information.

Step 503: A policy control function network element determines policy information. The policy information includes a correspondence among a first-type service, a first-type routing policy, and second indication information, the first-type service is a service deployed on a satellite, the first-type routing policy is used for determining a user plane function network element on the satellite as a session anchor of the terminal device, and the second indication information indicates that the policy information is used when the category of the backhaul network is the satellite backhaul category.

That the second indication information indicates that the policy information is used when the category of the backhaul network is the satellite backhaul category means that the first-type routing policy in the policy information is used in a scenario in which the category of the backhaul network is the satellite backhaul category. In other words, the second indication information indicates that the corresponding first-type routing policy of the corresponding first-type service can be used or is valid in the satellite backhaul category.

In an optional implementation, the policy information may further include a correspondence between the first-type service and a second-type routing policy, and the second-type routing policy is used for determining that a user plane function network element at a location other than the satellite (for example, on the ground) is used as the session anchor of the terminal device.

A routing policy indicates corresponding route selection parameters for accessing a service, for example, parameters such as S-NSSAI and a DNN. The first-type routing policy and the second-type routing policy indicate route selection parameters corresponding to the first-type service, for example, S-NSSAI and a DNN that correspond to the first-type service.

In an example, the second indication information may be included in the first-type routing policy, or the second indication information may be included in the first-type service, or the second indication information and the first-type routing policy may be included in the policy information in parallel.

For example, it is assumed that the first-type service includes a service 1 and a service 2. When the policy information includes the correspondence among the first-type service, the first-type routing policy, and the second indication information, and the correspondence between the first-type service and the second-type routing policy, and the second indication information is included in the first-type routing policy, the policy information may be shown in Table 2. When the policy information includes the correspondence among the first-type service, the first-type routing policy, and the second indication information, and the correspondence between the first-type service and the second-type routing policy, and the second indication information and the first-type routing policy are included in the policy information in parallel, the policy information may be shown in Table 3. When the policy information includes the first-type service, the first-type routing policy, and the second indication information, and the second indication information is included in the first-type service, the policy information may be shown in Table 4. In Table 2, Table 3, and Table 4, the second indication information is shown by using an SATB indication as an example.

**Table 2**

| Policy information | |
|---|---|
| Service | Route selection policy, including a DNN, S-NSSAI, and an SATB indication |
| Service 1, service 2 | (DNN, S-NSSAI)-1, SATB |
| | (DNN, S-NSSAI)-2 |

**Table 3**

| Policy information | | |
|---|---|---|
| Service | Route selection policy, including a DNN and S-NSSAI | SATB indication |
| Service 1, service 2 | Policy A | SATB |
| | Policy B | (/Null (null)) |

**Table 4**

| Policy information | |
|---|---|
| Service, SATB indication | Route selection policy, including a DNN and S-NSSAI |
| Service 1, service 2; and SATB indication | (DNN, S-NSSAI)-1 |
| Service 1, service 2 | (DNN, S-NSSAI)-2 |

It can be learned from Table 2 that the first-type routing policy corresponding to the service 1 and the service 2 includes the second indication information. It can be learned from Table 3 that the first-type routing policy corresponding to the service 1 and the service 2 exists in parallel with the second indication information. It can be learned from Table 4 that the first-type routing policy is applicable to a scenario in which the service 1 and the service 2 are used and the terminal device accesses a network through satellite backhaul (where that is, the second indication information is included in the first-type service). In this case, the terminal device stores the first-type service, the first-type routing policy, and the second indication information.

Based on Table 2, Table 3, and Table 4, when the terminal device accesses the service 1 or the service 2, and when the category of the backhaul network of the terminal device is the satellite backhaul category, the terminal device selects the first-type routing policy based on the SATB indication, so that the terminal device may establish a session based on (DNN, S-NSSAI)-1 or the policy A, that is, establish a session whose anchor is located on the satellite, that is, determine the user plane function network element on the satellite as the session anchor of the terminal device. When the category of the backhaul network of the terminal device is a non-satellite backhaul category, the terminal device selects the second-type routing policy, so that the terminal device establishes a session based on (DNN, S-NSSAI)-2 or the policy B, that is, establishes a session whose anchor is not located on the satellite (for example, on the ground).

Step 504: The policy control function network element sends the policy information to the terminal device.

For example, the policy control function network element may send the policy information to the terminal device through a network element such as the access and mobility management function network element.

It should be noted that a sequence of step 501 and step 502, and step 503 and step 504 is not limited in this application.

Step 505: The terminal device determines, based on the first indication information and the policy information, the first-type routing policy corresponding to the first-type service.

For example, when the terminal device determines, based on the first indication information and the policy information, the first-type routing policy corresponding to the first-type service, the terminal device determines, based on the first indication information, to select the first-type routing policy corresponding to the second indication information in the policy information.

Further, the terminal device may initiate a session establishment procedure, and send a non-access stratum message (non-access stratum message, NAS message) to the access and mobility management function network element, where the non-access stratum message includes the first-type routing policy. Further, the access and mobility management function network element sends the first-type routing policy to a session management function network element, so that the session management function network element selects, based on the first-type routing policy, the user plane function network element on the satellite as the session anchor of the terminal device.

In an optional implementation, after determining that the category of the backhaul network of the terminal device changes, the access and mobility management function network element may send third indication information to the terminal device, where the third indication information indicates an updated category of the backhaul network of the terminal device. Further, the terminal device may update, based on the third indication information, a routing policy corresponding to the first-type service.

The access and mobility management function network element may send the third indication information to the terminal device in the configuration update procedure of the terminal device. For example, the third indication information indicates that the category of the backhaul network of the terminal device is updated to the non-satellite backhaul category.

In an example, when the policy control network element updates, based on the third indication information, the routing policy corresponding to the first-type service, and when the category of the backhaul network of the terminal device changes from the satellite backhaul category to the non-satellite backhaul category, the terminal device re-determines the second routing policy corresponding to the first-type service, to establish a session based on the second routing policy, so that the terminal device establishes a session whose anchor is not located on the satellite (for example, on the ground). For example, when the first indication information indicates that the category of the backhaul network of the terminal device is the satellite backhaul category, the terminal device determines that the routing policy corresponding to the first-type service is a routing policy 1. When the terminal device receives the third indication information, and the third indication information indicates that the terminal device no longer accesses the network through the satellite backhaul or indicates that the terminal device accesses the network through LEO satellite backhaul, the terminal device determines that the routing policy corresponding to the first-type service is a routing policy 2.

It may be understood that, for an established session anchored on the satellite, the terminal device may immediately release the session or release the session when a service on the session ends.

According to the foregoing communication method, the terminal device senses the category of the backhaul network of the terminal device, and the routing policy is used when the satellite backhaul category is specified in the policy information of the terminal device by using the second indication information, so that when the terminal device accesses the network through the satellite backhaul, the terminal device can select an appropriate routing policy, and it is ensured that the anchor of the terminal device is determined on the satellite. In this way, a service communication delay is reduced and user experience is improved.

Based on the foregoing embodiments, the following describes in detail the communication method provided in this embodiment of this application by using specific examples. In the following example, an example in which the terminal device is UE, the access and mobility management function network element is an AMF, and the policy control function network element is a PCF is used for detailed description.

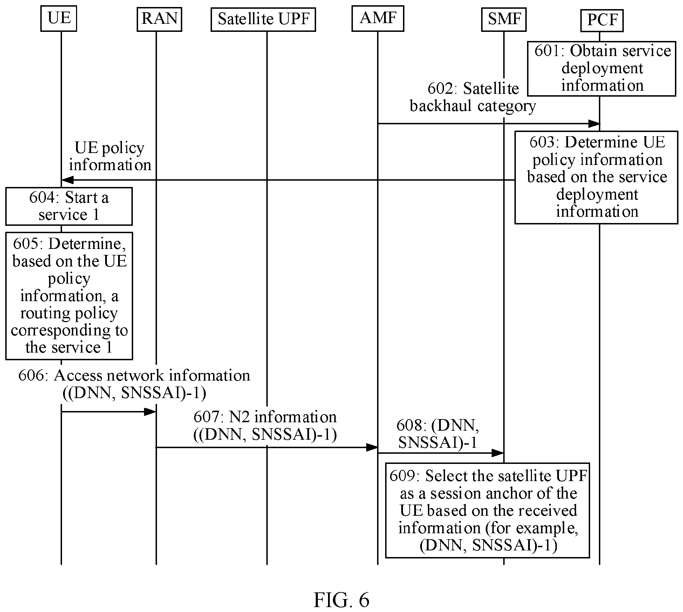

FIG. 6 shows an example of a communication method. In this example, a PCF senses a backhaul category of UE, and adjusts policy information of the UE, so that when the UE accesses a network through satellite backhaul, the UE selects a corresponding routing policy, to ensure that a session anchored on a satellite UPF is established. A specific procedure of the example may include the following steps.

Step 601: The PCF obtains service deployment information.

The service deployment information may include information about a service deployed on a satellite, or further include information about a service not deployed on a satellite (for example, deployed on the ground). The service deployment information may be deployment information of an edge computing service.

For example, edge service deployment information may be represented by using a correspondence between a DNAI and an FQDN. Satellite edge service deployment information may be represented by using a correspondence between a satellite identifier (satellite identification, SAT ID) and an FQDN.

Step 602: The UE initiates a registration procedure, and the UE registers with the network. In the registration procedure, after determining that the UE accesses the network through the satellite backhaul (SATB), an AMF sends an SATB indication to the PCF, to indicate that the UE accesses the network through the satellite backhaul. To be specific, step 602 shown in FIG. 6 is performed: The AMF sends a satellite backhaul category to the PCF, to indicate that a category of a backhaul network of a terminal device is the satellite backhaul category.

Optionally, the PCF may send subscription information to the AMF, where the subscription information is used for subscribing to a change indication of the category of the backhaul network of the terminal device. A change of the category of the backhaul network includes a change of the satellite backhaul category and a non-satellite backhaul category.

Specifically, for a method for determining, by the AMF, that the UE accesses the network through the SATB, refer to the method for determining, by the access and mobility management function network element, whether the terminal device accesses the network through the satellite backhaul in the embodiment shown in FIG. 4. Details are not described herein again.

It should be noted that a sequence of step 601 and step 602 is not limited in this application.

Step 603: After the PCF receives the satellite backhaul category from the AMF, the PCF determines the UE policy information (policy) based on the service deployment information, and sends the UE policy information to the UE. The UE policy information includes a correspondence between service information and a routing policy.

A service corresponding to the service information may be classified into two types: a satellite service (to be specific, the foregoing first-type service) and another service (to be specific, the foregoing second-type service) than the satellite service, for example, a terrestrial service.

For a service deployed both on the ground and on the satellite, the UE policy information includes only a routing policy corresponding to the satellite service.

Optionally, when the satellite backhaul category is GEO satellite backhaul, that is, when the PCF determines that the UE accesses the network through the GEO satellite backhaul, the PCF determines the UE policy information based on the service deployment information.

For example, the UE policy information may be shown in Table 1. For related descriptions, refer to each other. Details are not described herein again.

Step 604: The UE starts a service. For example, the UE starts a service 1 (the first-type service).

Step 605: The UE determines, based on the UE policy information, a routing policy corresponding to the service 1 (to be specific, a first-type routing policy corresponding to the first-type service). For example, as shown in Table 1, the routing policy determined by the UE is (DNN, SNSSAI)-1.

Step 606: The UE initiates a session establishment procedure, and sends access network information (access network, AN message) to a RAN, where the AN information carries NAS information. The NAS information carries (DNN, SNSSAI)-1 and a session establishment request.

Step 607: The RAN sends N2 information (N2 message) to the AMF, where the N2 information carries the NAS message.

The N2 information may further include an AN parameter (parameter).

Step 608: The AMF sends (DNN, SNSSAI)-1 and the session establishment request to an SMF.

For example, the AMF may send (DNN, SNSSAI)-1 and the session establishment request to the SMF by using an Nsmf_createSMconext_request service.

Step 609: The SMF selects a satellite UPF as a session anchor of the UE based on the received information (for example, (DNN, SNSSAI)-1).

The satellite UPF may be a GEO UPF, to be specific, a UPF on a GEO satellite corresponding to satellite backhaul currently used by the UE for access.

When the backhaul category used by the UE for access changes, for example, from the GEO satellite backhaul to LEO satellite backhaul, or from the satellite backhaul to non-satellite backhaul, the PCF receives a changed satellite backhaul category from the AMF. The PCF updates the UE policy information, where the UE policy information no longer includes the routing policy corresponding to the service on the satellite. After receiving updated UE policy information, the UE establishes a session based on the updated UE policy information. For an established session, in other words, a session used for accessing the service on the satellite, the UE may release the session immediately or release the session after the service ends.

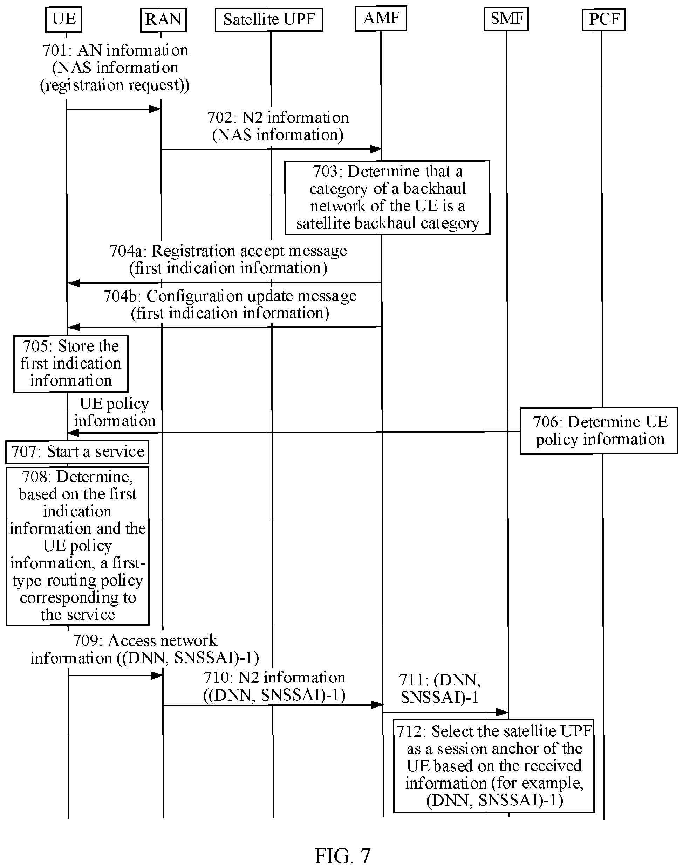

FIG. 7 shows an example of another communication method. In this example, UE senses a backhaul category of the UE, and a routing policy is used when a satellite backhaul category is specified in policy information of the UE, so that when the UE accesses a network through satellite backhaul, the UE may select an appropriate routing policy, to ensure that a session anchored on a satellite UPF is established. A specific procedure of the example may include the following steps.

Step 701: The UE initiates a registration procedure. The UE sends AN information (message) to a RAN, where the AN information carries NAS information. The NAS information carries a registration request.

Step 702: The RAN sends N2 information to an AMF, where the N2 information carries the NAS information.

Step 703: The AMF determines that a category of a backhaul network of the UE is the satellite backhaul category. That is, the AMF determines that the UE accesses the network through the SATB.

Step 704a: The AMF sends a registration accept message to the UE, where the registration accept message carries first indication information, and the first indication information indicates that the UE accesses the network through the SATB.

Optionally, when the AMF determines that the satellite backhaul category is a GEO satellite backhaul category, that is, when the AMF determines that the UE accesses the network through a GEO SATB, the AMF sends, to the UE, the registration accept message that carries the first indication information.

Step 704b: In a configuration update procedure, the AMF sends a configuration update message to the UE, where the configuration update message carries the first indication information.

Optionally, when the AMF determines that the satellite backhaul category is the GEO satellite backhaul category, that is, when the AMF determines that the UE accesses the network through the GEO SATB, the AMF sends, to the UE, the configuration update message that carries the first indication information.

It should be noted that one of step 704a and step 704b may be used. To be specific, the AMF may send the first indication information to the UE by using the registration accept message, or may send the first indication information by using the configuration update message.

Optionally, the AMF may send updated indication information (to be specific, the foregoing related third indication information) to the UE by using a UE configuration update procedure. For example, if the AMF determines that the category of the backhaul network of the UE changes, the AMF sends the updated indication information to the UE. For example, if the AMF determines that the category of the backhaul network used by the UE for access changes from the GEO SATB to another type such as non-satellite backhaul or LEO SATB, the AMF sends indication information 1 to the UE, to indicate that the category of the backhaul network used by the UE for access is no longer the GEO SATB.

Step 705: The UE stores the first indication information.

Step 706: A PCF determines the UE policy information, and sends the UE policy information to the UE.

The UE policy information includes a correspondence among service information (for example, a first-type service), a routing policy (for example, a first-type routing policy), and an STAB indication (to be specific, the foregoing related second indication information).

The SATB indication indicates that the UE policy is applicable only to a scenario in which the UE accesses the network through the satellite backhaul. Alternatively, the SATB indication may be described as follows: The SATB indication indicates a routing policy corresponding to a service corresponding to the SATB indication, and can be used or is valid only during the satellite backhaul.

For the UE policy information, refer to the descriptions in Table 2, Table 3, and Table 4. Details are not described herein again.

Step 707: The UE starts a service, for example, starts the first-type service.

Step 708: The UE determines, based on the first indication information and the UE policy information, the first-type routing policy corresponding to the service. For example, the first-type routing policy determined by the UE is (DNN, SNSSAI)-1.

Step 709 to step 712 are similar to step 606 to step 609, and mutual reference may be made to these steps. Details are not described herein again.

It should be noted that, when the UE policy information is shown in Table 1, the NAS information carried by the UE in step 709 may not carry the STAB indication, and only other information in the first-type routing policy, for example, (DNN, SNSSAI)-1, needs to be carried.

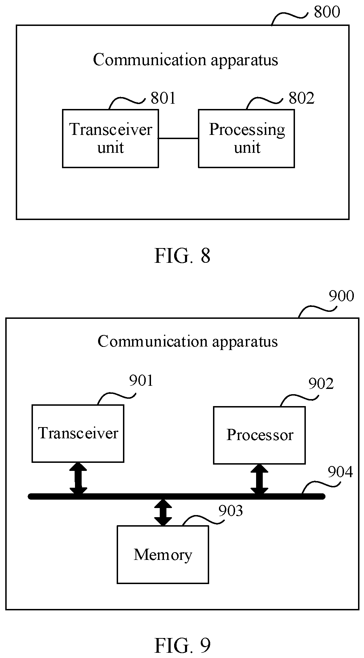

Based on the foregoing embodiments, an embodiment of this application further provides a communication apparatus. Refer to FIG. 8. A communication apparatus 800 may include a transceiver unit 801 and a processing unit 802. The transceiver unit 801 is configured to receive information (a message or data) or send information (a message or data) for the communication apparatus 800, and the processing unit 802 is configured to control and manage an action of the communication apparatus 800. The processing unit 802 may further control steps performed by the transceiver unit 801.

For example, the communication apparatus 800 may be specifically the policy control function network element (for example, the PCF) in the foregoing embodiments, a processor, a chip, a chip system, a functional module, or the like in the policy control function network element; or the communication apparatus 800 may be specifically the terminal device (for example, the UE), a processor, a chip, a chip system, a functional module, or the like of the terminal device in the foregoing embodiments; or the communication apparatus 800 may be specifically the access and mobility management function network element (for example, the AMF) in the foregoing embodiments, a processor, a chip, a chip system, a functional module, or the like of the access and mobility management function network element.

In an embodiment, when the communication apparatus 800 is configured to implement a function of the policy control function network element (PCF) in the embodiment shown in FIG. 4 or FIG. 6, the following may be specifically included: The processing unit 802 may be configured to: determine that a category of a backhaul network of a terminal device is a satellite backhaul category, and determine policy information of the terminal device based on the satellite backhaul category and service deployment information, where the policy information includes a correspondence between a first-type service and a first-type routing policy, the service deployment information includes deployment information of the first-type service, the first-type service is a service deployed on a satellite, and the first-type routing policy is used for determining a user plane function network element on the satellite as a session anchor of the terminal device. The transceiver unit 801 may be configured to send the policy information to the terminal device.

In an optional implementation, when determining that the category of the backhaul network of the terminal device is the satellite backhaul category, the processing unit 802 may be configured to control the transceiver unit 801 to obtain the satellite backhaul category from an access and mobility management function network element.

Optionally, the transceiver unit 801 is further configured to obtain the service deployment information.

For example, the satellite backhaul category is a geostationary earth orbit GEO satellite backhaul category.

In an example, the service deployment information may further include deployment information of a second-type service, where the second-type service is a service deployed on the ground, and a service included in the second-type service is different from a service included in the first-type service; and the policy information may further include a correspondence between the second-type service and a second-type routing policy.

In an optional implementation, the transceiver unit 801 is further configured to: send subscription information to the access and mobility management function network element, where the subscription information is used for subscribing to a change indication of the category of the backhaul network of the terminal device; and receive indication information from the access and mobility management function network element, where the indication information indicates that the category of the backhaul network of the terminal device changes. The processing unit 802 is further configured to update the policy information of the terminal device based on the indication information.

In another embodiment, when the communication apparatus 800 is configured to implement a function of the terminal device (UE) in the embodiment shown in FIG. 4 or FIG. 6, the following may be specifically included: The transceiver unit 801 may be configured to receive policy information from a policy control network element, where the policy information includes a correspondence between a first-type service and a first-type routing policy, the first-type service is a service deployed on a satellite, and the first-type routing policy is used for determining a user plane function network element on the satellite as a session anchor of the terminal device. The processing unit 802 may be configured to determine, based on the policy information, the first-type routing policy corresponding to the first-type service.

Optionally, the category of the backhaul network of the terminal device is a satellite backhaul category.

For example, the satellite backhaul category is a GEO satellite backhaul category.

In an example, the policy information further includes a correspondence between a second-type service and a second-type routing policy. The second-type service is a service deployed at a location other than the satellite, and a service included in the second-type service is different from a service included in the first-type service.

In another embodiment, when the communication apparatus 800 is configured to implement a function of the terminal device (UE) in the embodiment shown in FIG. 5 or FIG. 7, the following may be specifically included: The transceiver unit 801 may be configured to: obtain first indication information from an access and mobility management function network element, where the first indication information indicates that a category of a backhaul network of the terminal device is a satellite backhaul category; and receive policy information from a policy control function network element, where the policy information includes a correspondence among a first-type service, a first-type routing policy, and second indication information. The first-type service is a service deployed on a satellite, the first-type routing policy is used for determining a user plane function network element on the satellite as a session anchor of the terminal device, and the second indication information indicates that the policy information is used when the category of the backhaul network is the satellite backhaul category. The processing unit 802 may be configured to determine, based on the first indication information and the policy information, the first-type routing policy corresponding to the first-type service.

Optionally, the processing unit 802 may be further configured to store the first indication information.

For example, when obtaining the first indication information from the access and mobility management function network element, the transceiver unit 801 may be configured to: receive a registration accept message from the access and mobility management function network element, where the registration accept message includes the first indication information; or receive a configuration update message from the access and mobility management function network element, where the configuration update message includes the first indication information.

For example, the satellite backhaul category is a geostationary earth orbit GEO satellite backhaul category.

In an example, the policy information may further include a correspondence between the first-type service and a second-type routing policy, and the second-type routing policy is used for determining a user plane function network element on the ground as the session anchor of the terminal device.

In an optional implementation, the transceiver unit 801 may be further configured to send a non-access stratum message from the access and mobility management function network element, where the non-access stratum message includes the first-type routing policy.

Optionally, the second indication information is included in the first-type routing policy.

In a possible manner, the transceiver unit 801 may be further configured to receive third indication information from the access and mobility management function network element, where the third indication information indicates an updated category of the backhaul network of the terminal device. The processing unit 802 may be further configured to update, based on the third indication information, the routing policy corresponding to the first-type service.

In another embodiment, when the communication apparatus 800 is configured to implement a function of the access and mobility management function network element (AMF) in the embodiment shown in FIG. 5 or FIG. 7, the following may be specifically included: The processing unit 802 is configured to determine that a category of a backhaul network of a terminal device is a satellite backhaul category; and the transceiver unit 801 is configured to send first indication information to the terminal device, where the first indication information indicates that the category of the backhaul network of the terminal device is the satellite backhaul category.

Optionally, when sending the first indication information to the terminal device, the transceiver unit 801 may be configured to: send a registration accept message to the terminal device, where the registration accept message includes the first indication information; or send a configuration update message to the terminal device, where the configuration update message includes the first indication information.

For example, the satellite backhaul category is a GEO satellite backhaul category.

In an example, the processing unit 802 may be further configured to determine that the category of the backhaul network of the terminal device changes. The transceiver unit 801 may be further configured to send third indication information to the terminal device, where the third indication information indicates an updated category of the backhaul network of the terminal device.

In another embodiment, when the communication apparatus 800 is configured to implement a function of the policy control function network element (PCF) in the embodiment shown in FIG. 5 or FIG. 7, the following may be specifically included: The processing unit 802 may be configured to determine policy information, where the policy information includes a correspondence among a first-type service, a first-type routing policy, and second indication information. The first-type service is a service deployed on a satellite, the first-type routing policy is used for determining a user plane function network element on the satellite as a session anchor of the terminal device, and the second indication information indicates that the policy information is used when a category of a backhaul network is a satellite backhaul category. The transceiver unit 801 may be configured to send the policy information to the terminal device.

Optionally, the satellite backhaul category is a GEO satellite backhaul category.

In an example, the policy information further includes a correspondence between the first-type service and a second-type routing policy, and the second-type routing policy is used for determining a user plane function network element on the ground as the session anchor of the terminal device.

For example, the second indication information is included in the first-type routing policy.

It should be noted that, in this embodiment of this application, division into the units is an example, and is merely a logical function division. During actual implementation, another division manner may be used. Functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, or a network device) or a processor (processor) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

Based on the foregoing embodiments, an embodiment of this application further provides a communication apparatus. Refer to FIG. 9. A communication apparatus 900 may include a transceiver 901 and a processor 902. Optionally, the communication apparatus 900 may further include a memory 903. The memory 903 may be disposed inside the communication apparatus 900, or may be disposed outside the communication apparatus 900. The processor 902 may control the transceiver 901 to receive and send information, a message, data, or the like.

Specifically, the processor 902 may be a central processing unit (central processing unit, CPU), a network processor (network processor, NP), or a combination of a CPU and an NP. The processor 902 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable logic gate array (field-programmable gate array, FPGA), a generic array logic (generic array logic, GAL), or any combination thereof.

The transceiver 901, the processor 902, and the memory 903 are connected to each other. Optionally, the transceiver 901, the processor 902, and the memory 903 are connected to each other by using a bus 904. The bus 904 may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of representation, only one thick line is used to represent the bus in FIG. 9, but this does not mean that there is only one bus or only one type of bus.

In an optional implementation, the memory 903 is configured to store a program and the like. Specifically, the program may include program code, and the program code includes computer operation instructions. The memory 903 may include a RAM, and may further include a non-volatile memory (non-volatile memory), for example, one or more disk memories. The processor 902 executes the application program stored in the memory 903, to implement the foregoing function, so that a function of the communication apparatus 900 is implemented.

For example, the communication apparatus 900 may be the policy control function network element (for example, the PCF) in the foregoing embodiments, or may be the terminal device (for example, the UE) in the foregoing embodiments, or may be the access and mobility management function network element (for example, the AMF) in the foregoing embodiments.

In an embodiment, when the communication apparatus 900 implements a function of the policy control function network element (for example, the PCF) in the embodiment shown in FIG. 4 or FIG. 6, the transceiver 901 may implement a receiving and sending operation performed by the policy control function network element (for example, the PCF) in the embodiment shown in FIG. 4 or FIG. 6, and the processor 902 may implement another operation than the receiving and sending operation performed by the policy control function network element (for example, the PCF) in the embodiment shown in FIG. 4 or FIG. 6. For detailed related descriptions, refer to related descriptions in the foregoing embodiment shown in FIG. 4 or FIG. 6. Details are not described herein again.

In an embodiment, when the communication apparatus 900 implements a function of the terminal device (for example, the UE) in the embodiment shown in FIG. 4 or FIG. 6, the transceiver 901 may implement a receiving and sending operation performed by the terminal device (for example, the UE) in the embodiment shown in FIG. 4 or FIG. 6, and the processor 902 may implement another operation than the receiving and sending operation performed by the terminal device (for example, the UE) in the embodiment shown in FIG. 4 or FIG. 6. For detailed related descriptions, refer to related descriptions in the foregoing embodiment shown in FIG. 4 or FIG. 6. Details are not described herein again.

In an embodiment, when the communication apparatus 900 implements a function of the terminal device (for example, the UE) in the embodiment shown in FIG. 5 or FIG. 7, the transceiver 901 may implement a receiving and sending operation performed by the terminal device (for example, the UE) in the embodiment shown in FIG. 5 or FIG. 7, and the processor 902 may implement another operation than the receiving and sending operation performed by the terminal device (for example, the UE) in the embodiment shown in FIG. 5 or FIG. 7. For detailed related descriptions, refer to related descriptions in the foregoing embodiment shown in FIG. 5 or FIG. 7. Details are not described herein again.

In an embodiment, when the communication apparatus 900 implements a function of the access and mobility management function network element (for example, the AMF) in the embodiment shown in FIG. 5 or FIG. 7, the transceiver 901 may implement a receiving and sending operation performed by the access and mobility management function network element (for example, the AMF) in the embodiment shown in FIG. 5 or FIG. 7, and the processor 902 may implement another operation than the receiving and sending operation performed by the access and mobility management function network element (for example, the AMF) in the embodiment shown in FIG. 5 or FIG. 7. For detailed related descriptions, refer to related descriptions in the foregoing embodiment shown in FIG. 5 or FIG. 7. Details are not described herein again.

In an embodiment, when the communication apparatus 900 implements a function of the policy control function network element (for example, the PCF) in the embodiment shown in FIG. 5 or FIG. 7, the transceiver 901 may implement a receiving and sending operation performed by the policy control function network element (for example, the PCF) in the embodiment shown in FIG. 5 or FIG. 7, and the processor 902 may implement another operation than the receiving and sending operation performed by the policy control function network element (for example, the PCF) in the embodiment shown in FIG. 5 or FIG. 7. For detailed related descriptions, refer to related descriptions in the foregoing embodiment shown in FIG. 5 or FIG. 7. Details are not described herein again.

Based on the foregoing embodiments, an embodiment of this application provides a communication system. The communication system may include the policy control function network element, the terminal device, the access and mobility management function network element, and the like in the foregoing embodiments.

An embodiment of this application further provides a computer-readable storage medium. The computer-readable storage medium is configured to store a computer program. When the computer program is executed by a computer, the computer may implement the communication method provided in the foregoing method embodiments.

An embodiment of this application further provides a computer program product. The computer program product is configured to store a computer program. When the computer program is executed by a computer, the computer may implement the communication method provided in the foregoing method embodiments.

An embodiment of this application further provides a chip, including a processor. The processor is coupled to a memory, and is configured to invoke a program in the memory, so that the chip implements the communication method provided in the foregoing method embodiments.

An embodiment of this application further provides a chip. The chip is coupled to a memory, and the chip is configured to implement the communication method provided in the foregoing method embodiments.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that each procedure and/or block in the flowcharts and/or block diagrams, and combinations of the procedures and/or blocks in the flowcharts and/or block diagrams may be implemented by computer program instructions. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

These computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more procedures in the flowcharts and/or in one or more blocks in the block diagrams.

It is clearly that, a person skilled in the art can make various modifications and variations to this application without departing from the scope of this application. This application is intended to cover these modifications and variations of this application provided that they fall within the scope of protection defined by the following claims and their equivalent technologies.

## Claims

1. A communication method, comprising:
determining, by a policy control function network element, that a category of a backhaul network of a terminal device is a satellite backhaul category;
determining, by the policy control function network element, policy information of the terminal device based on the satellite backhaul category and service deployment information, wherein the service deployment information comprises information about a service deployed on a satellite, the policy information comprises a correspondence between the service deployed on the satellite and a first-type routing policy, and the first-type routing policy is used for determining a user plane function network element on the satellite as a session anchor of the terminal device; and
sending, by the policy control function network element, the policy information to the terminal device.

2. The method according to claim 1, wherein the determining, by a policy control function network element, that a category of a backhaul network of a terminal device is a satellite backhaul category comprises:
obtaining, by the policy control function network element, the satellite backhaul category from an access and mobility management function network element.

3. The method according to claim 1 or 2, wherein the method further comprises:
obtaining, by the policy control function network element, the service deployment information.

4. The method according to any one of claims 1 to 3, wherein the satellite backhaul category is a geostationary earth orbit GEO satellite backhaul category.

5. The method according to any one of claims 1 to 4, wherein the service deployment information further comprises information about a service deployed on the ground, and the service deployed on the ground is different from the service deployed on the satellite; and
the policy information further comprises a correspondence between the service deployed on the ground and a second-type routing policy.

6. The method according to any one of claims 1 to 5, wherein the method further comprises:
sending, by the policy control function network element, subscription information to the access and mobility management function network element, wherein the subscription information is used for subscribing to a change indication of the category of the backhaul network of the terminal device;
receiving, by the policy control function network element, indication information from the access and mobility management function network element, wherein the indication information indicates that the category of the backhaul network of the terminal device changes; and
updating, by the policy control network element, the policy information of the terminal device based on the indication information.

7. A communication method, comprising:
obtaining, by a terminal device, first indication information from an access and mobility management function network element, wherein the first indication information indicates that a category of a backhaul network of the terminal device is a satellite backhaul category;
receiving, by the terminal device, policy information from a policy control function network element, wherein the policy information comprises a correspondence among a first-type service, a first-type routing policy, and second indication information, the first-type service is a service deployed on a satellite, the first-type routing policy is used for determining a user plane function network element on the satellite as a session anchor of the terminal device, and the second indication information indicates that the policy information is used when the category of the backhaul network is the satellite backhaul category; and
determining, by the terminal device based on the first indication information and the policy information, the first-type routing policy corresponding to the first-type service.

8. The method according to claim 7, wherein the method further comprises:
storing, by the terminal device, the first indication information.

9. The method according to claim 7 or 8, wherein the obtaining, by a terminal device, first indication information from an access and mobility management function network element comprises:
receiving, by the terminal device, a registration accept message from the access and mobility management function network element, wherein the registration accept message comprises the first indication information; or
receiving, by the terminal device, a configuration update message from the access and mobility management function network element, wherein the configuration update message comprises the first indication information.

10. The method according to any one of claims 7 to 9, wherein the satellite backhaul category is a geostationary earth orbit GEO satellite backhaul category.

11. The method according to any one of claims 7 to 10, wherein the policy information further comprises a correspondence between the first-type service and a second-type routing policy, and the second-type routing policy is used for determining a user plane function network element on the ground as the session anchor of the terminal device.

12. The method according to any one of claims 7 to 11, wherein the method further comprises:
sending, by the terminal device, a non-access stratum message to the access and mobility management function network element, wherein the non-access stratum message comprises the first-type routing policy.

13. The method according to any one of claims 7 to 11, wherein the second indication information is comprised in the first-type routing policy.

14. The method according to any one of claims 7 to 13, wherein the method further comprises:
receiving, by the terminal device, third indication information from the access and mobility management function network element, wherein the third indication information indicates an updated category of the backhaul network of the terminal device; and
updating, by the terminal device based on the third indication information, the routing policy corresponding to the first-type service.

15. A communication method, comprising:
determining, by an access and mobility management function network element, that a category of a backhaul network of a terminal device is a satellite backhaul category; and
sending, by the access and mobility management function network element, first indication information to the terminal device, wherein the first indication information indicates that the category of the backhaul network of the terminal device is the satellite backhaul category.

16. The method according to claim 15, wherein the sending, by the access and mobility management function network element, first indication information to the terminal device comprises:
sending, by the access and mobility management function network element, a registration accept message to the terminal device, wherein the registration accept message comprises the first indication information; or
sending, by the access and mobility management function network element, a configuration update message to the terminal device, wherein the configuration update message comprises the first indication information.

17. The method according to claim 15 or 16, wherein the satellite backhaul category is a GEO satellite backhaul category.

18. The method according to any one of claims 15 to 17, wherein the method further comprises:
determining, by the access and mobility management function network element, that the category of the backhaul network of the terminal device changes; and
sending, by the access and mobility management function network element, third indication information to the terminal device, wherein the third indication information indicates an updated category of the backhaul network of the terminal device.

19. A communication method, comprising:
determining, by a policy control function network element, policy information, wherein the policy information comprises a correspondence among a first-type service, a first-type routing policy, and second indication information, the first-type service is a service deployed on a satellite, the first-type routing policy is used for determining a user plane function network element on the satellite as a session anchor of the terminal device, and the second indication information indicates that the policy information is used when a category of a backhaul network is a satellite backhaul category; and
sending, by the policy control function network element, the policy information to the terminal device.

20. The method according to claim 19, wherein the satellite backhaul category is a GEO satellite backhaul category.

21. The method according to claim 19 or 20, wherein the policy information further comprises a correspondence between the first-type service and a second-type routing policy, and the second-type routing policy is used for determining a user plane function network element on the ground as the session anchor of the terminal device.

22. The method according to any one of claims 19 to 21, wherein the second indication information is comprised in the first-type routing policy.

23. A communication apparatus, comprising:
a processing unit, configured to: determine that a category of a backhaul network of a terminal device is a satellite backhaul category; and determine policy information of the terminal device based on the satellite backhaul category and service deployment information, wherein the service deployment information comprises information about a service deployed on a satellite, the policy information comprises a correspondence between the service deployed on the satellite and a first-type routing policy, and the first-type routing policy is used for determining a user plane function network element on the satellite as a session anchor of the terminal device; and
a transceiver unit, configured to send the policy information to the terminal device.

24. The communication apparatus according to claim 23, wherein that the processing unit is configured to determine that the category of the backhaul network of the terminal device is the satellite backhaul category comprises: controlling the transceiver unit to obtain the satellite backhaul category from an access and mobility management function network element.

25. The communication apparatus according to claim 23 or 24, wherein
the transceiver unit is further configured to obtain the service deployment information.

26. The communication apparatus according to any one of claims 23 to 25, wherein the satellite backhaul category is a geostationary earth orbit GEO satellite backhaul category.

27. The communication apparatus according to any one of claims 23 to 26, wherein
the service deployment information further comprises information about a service deployed on the ground, wherein the service deployed on the ground is different from the service deployed on the satellite; and the policy information further comprises a correspondence between the service deployed on the ground and a second-type routing policy.

28. The communication apparatus according to any one of claims 23 to 27, wherein
the transceiver unit is further configured to: send subscription information to the access and mobility management function network element, wherein the subscription information is used for subscribing to a change indication of the category of the backhaul network of the terminal device; and receive indication information from the access and mobility management function network element, wherein the indication information indicates that the category of the backhaul network of the terminal device changes; and
the processing unit is further configured to update the policy information of the terminal device based on the indication information.

29. A communication apparatus, comprising a memory, a processor, and a transceiver, wherein
the memory is configured to store computer instructions;
the transceiver is configured to receive and send information; and
the processor is coupled to the memory, and is configured to invoke the computer instructions in the memory, to perform the method according to any one of claims 1 to 6, 7 to 14, or 15 to 18 by using the transceiver.

30. A communication apparatus, comprising a memory, a processor, and a transceiver, wherein
the memory is configured to store computer instructions;
the transceiver is configured to receive and send information; and
the processor is coupled to the memory, and is configured to invoke the computer instructions in the memory, to perform the method according to any one of claims 19 to 22 by using the transceiver.

31. A computer-readable storage medium, wherein the computer-readable storage medium stores computer-executable instructions, and when the computer-executable instructions are invoked by a computer, the computer-executable instructions are used for performing the method according to any one of claims 1 to 6, or performing the method according to any one of claims 7 to 14, or performing the method according to any one of claims 15 to 18, or performing the method according to any one of claims 19 to 22.

32. A computer program product, comprising instructions, wherein when the instructions are run on a computer, the method according to any one of claims 1 to 6, the method according to any one of claims 7 to 14, the method according to any one of claims 15 to 18, or the method according to any one of claims 19 to 22 is performed.

33. A chip, wherein the chip is coupled to a memory, and is configured to read and execute program instructions stored in the memory, to implement the method according to any one of claims 1 to 6, or implement the method according to any one of claims 7 to 14, or implement the method according to any one of claims 15 to 18, or implement the method according to any one of claims 19 to 22.

34. A communication system, comprising a policy control function network element and an access and mobility management function network element, wherein
the access and mobility management function network element is configured to send a satellite backhaul category to the policy control function network element; and
the policy control function network element is configured to: obtain the satellite backhaul category from the access and mobility management function network element; determine policy information of a terminal device based on the satellite backhaul category and service deployment information, wherein the service deployment information comprises information about a service deployed on a satellite, the policy information comprises a correspondence between the service deployed on the satellite and a first-type routing policy, and the first-type routing policy is used for determining a user plane function network element on the satellite as a session anchor of the terminal device; and send the policy information to the terminal device.

35. The communication system according to claim 34, wherein
the policy control function network element is further configured to obtain the service deployment information.

36. The communication system according to claim 34 or 35, wherein the satellite backhaul category is a geostationary earth orbit GEO satellite backhaul category.

37. The communication system according to any one of claims 34 to 36, wherein the service deployment information further comprises information about a service deployed on the ground, wherein the service deployed on the ground is different from the service deployed on the satellite; and
the policy information further comprises a correspondence between the service deployed on the ground and a second-type routing policy.

38. A communication method, comprising:
sending, by an access and mobility management function network element, a satellite backhaul category to a policy control function network element; and
obtaining, by the policy control function network element, the satellite backhaul category from the access and mobility management function network element; determining policy information of a terminal device based on the satellite backhaul category and service deployment information, wherein the service deployment information comprises information about a service deployed on a satellite, the policy information comprises a correspondence between the service deployed on the satellite and a first-type routing policy, and the first-type routing policy is used for determining a user plane function network element on the satellite as a session anchor of the terminal device; and sending the policy information to the terminal device.

39. The communication method according to claim 38, further comprising:
obtaining, by the policy control function network element, the service deployment information.

40. The communication method according to claim 38 or 39, wherein the satellite backhaul category is a geostationary earth orbit GEO satellite backhaul category.

41. The communication method according to any one of claims 38 to 40, wherein the service deployment information further comprises information about a service deployed on the ground, the service deployed on the ground is different from the service deployed on the satellite; and the policy information further comprises a correspondence between the service deployed on the ground and a second-type routing policy.
